# EUROPÄISCHE PATENTSCHRIFT

(11) **EP 0 447 740 B1**
(45) Veröffentlichungstag und Bekanntmachung des Hinweises auf die Patenterteilung: **27.04.1994**
(21) Anmeldenummer: 90890044.2
(22) Anmeldetag: 21.02.1990
(51) Int. Cl.: B23Q 3/06

(54) **Vorrichtung zum Bearbeiten von insbesondere übereinandergelegten Werkstücken**
Machining device especially for packed workpieces
Dispositif d'usinage en particulier pour des pièces entassées

(43) Veröffentlichungstag der Anmeldung: 25.09.1991
(73) Patentinhaber: GFM Gesellschaft für Fertigungstechnik und Maschinenbau Aktiengesellschaft, A-4403 Steyr (AT)
(72) Erfinder: Blaimschein, Gottfried, Dipl.-Ing., A-4407 Steyr (AT)
(74) Vertreter: Hübscher, Gerhard, Dipl.-Ing.

(56) Entgegenhaltungen:
- EP-A- 0 010 043
- EP-A- 0 019 292
- DE-C- 390 872
- US-A- 3 587 391
- US-A- 3 700 227
- US-A- 4 819 532

## Beschreibung

Die Erfindung bezieht sich auf eine Vorrichtung zum Bearbeiten von insbesondere übereinandergelegten Werkstücken, mit einem eine Auflagefläche und eine Aufspanneinrichtung aufweisenden Aufspanntisch und einem über die Auflagefläche verfahrbaren, numerisch gesteuerten Werkzeugaggregat, welcher Aufspanneinrichtung wenigstens ein über die ganze Auflagefläche bewegbarer, gegen die Auflagefläche drückbarer Niederhalter zugehört.

Um in mehreren Lagen übereinandergeschichtete Werkstücke gemeinsam bearbeiten zu können, beispielsweise Werkstückteile aus Blechplatten ausschneiden und bohren oder beidseits folienbedeckte Prepreg-Materialien od.dgl. nichthaftende Materialien schneiden zu können, muß für einen entsprechenden Halt der Werkstückstapel gesorgt werden, und zwar einerseits gegenüber der Auflagefläche und anderseits gegenüber den einzelnen Lagen selbst. Dazu werden die Werkstücke bisher, wie aus dem Prospekt "TRUMATIC 260 BFZ" der Firma Trumpf Maschinenfabrik hervorgeht, stapelweise mit einer unteren verlorenen Aufspannpalette zusammengeschraubt oder -genietet und die Aufspannpalette wird dann über die Aufspanneinrichtung, die Spannpratzen, aber auch Saugkästen für die Auflagefläche u.dgl. aufweisen kann, am Tisch festgehalten. Zusätzlich ist es möglich, das Werkzeugaggregat mit einem Niederhalter auszurüsten, um den Werkstückstapel für ein Bohren im Bereich des Bohrloches zusammenpressen zu können. Bei Bandmateriallagen werden die Stapel über Klebeolien zusammengehalten und auf einem Vakuumtisch fixiert, und es wurde bei Aluminiumplatten auch schon vorgeschlagen, die Stapel durch ein Tieffrieren zusammenzuhalten. Alle diese bekannten Maßnahmen sind allerdings recht aufwendig und zeitraubend, erfordern zusätzliche Hilfsmaterialien, bringen sogar teilweise eine Lochung od.dgl. Veränderung der Werkstücke mit sich und müssen darüber hinaus auch auf die jeweiligen Werkstücke und Bearbeitungsarten speziell angepaßt sein.

Der Erfindung liegt daher die Aufgabe zugrunde, diese Mängel zu beseitigen und eine Vorrichtung der eingangs geschilderten Art zu schaffen, die in verhältnismäßig einfacher Weise ein rationelles Aufspannen beliebiger Werkstückstapel erlaubt und in weiten Bereichen bei verschiedensten Bearbeitungen jeweils bearbeitungsgerecht einsetzbar ist.

Die Erfindung löst diese Aufgabe bei einer Vorrichtung der eingangs genannten Art dadurch, daß der Niederhalter aus einer unabhängig vom Werkzeugaggregrat bewegbaren Niederhaltereinheit besteht, die einen Niederhalterschlitten und einen lageverstellbaren und kraftbeaufschlagbaren Niederhalterfinger umfaßt, wobei die Schlittenantriebe und Fingerstelltriebe in Abhängikeit von der Steuerung des Werkzeugaggregates ansteuerbar sind. Diese Niederhaltereinheit erlaubt eine freie Positionierbarkeit des Niederhalterfingers und ihr Zusammenwirken mit der Steuerung des Werkzeugaggregates ermöglicht es, den Einsatz dieser Niederhaltereinheit bzw. des Niederhalterfingers zeitlich und räumlich auf den vom Werkzeugaggregat durchzuführenden Bearbeitungsvorgang abzustimmen. Die Werkstücklagen können so immer in einem für den Bearbeitungsvorgang günstigen Bereich zusammengedrückt werden, so daß ein gegenseitiges Relativverschieben der Lagen auf Grund der Bearbeitungskräfte nicht zu befürchten ist. Die Lagen selbst brauchen nicht mehr durch zusätzliche Maßnahmen und Hilfsmittel miteinander verbunden zu werden und es genügt die für die verschiedensten Werkstücke und Arbeiten einsetzbare Niederhaltereinheit. Werden aus einem Materialstapel mehrere Werkstücke herausgeschnitten oder die Werkstücke in verschiedene Teile zerlegt, wird es zweckmäßig sein, den Materialstapel als Ganzes auf der Auflagefläche durch übliche Klemmpratzen od.dgl. oder bei Vakuumtischen durch Saugwirkung an der Auflagefläche zu fixieren, wozu der Stapel vorteilhafterweise auf eine Aufspannpalette kommt, die aber nur als Unterlage dient und daher beliebig oft wiederverwendbar ist. Diese Aufspannpalette bringt den Halt gegenüber der Auflagefläche mit sich und die Niederhaltereinheit sorgt dann für die Halterung der Materiallagen bzw. der aus den Lagen herausgearbeiteten Werkstückteile u.dgl. gegenüber der Palette.

Trägt der Niederhalterfinger eine bremsbare Niederhalterrolle, ist es möglich, die Niederhaltereinheit, ohne die Niederhalterkraft zu verringern oder aufzuheben, relativ zum Werkstückstapel zu bewegen, um beispielsweise einem besonderen Bearbeitungsprozeß entsprechend von einer zur anderen Niederhalterposition zu gelangen. Während dieses Verschiebens rollt die Niederhalterrolle am obersten Werkstück mit gleichbleibendem Niederhalterdruck ab, sie wird aber in der gewünschten Niederhalterposition gebremst, um hier einer Relativbewegung zwischen Niederhalterfinger und Werkstückstapel vorzubeugen.

Besonders vorteilhaft ist es, wenn der Niederhalterschlitten zwei einzeln betätigbare Niederhalterfinger aufnimmt, so daß diese Niederhalterfinger gleichzeitig oder abwechselnd eingesetzt werden können. So läßt sich beispielsweise beim Ausschneiden von Werkstücken oder Rauten auf Tiefe mit einem in sich geschlossenen Schnitt- oder Bearbeitungsverlauf bei Bearbeitungsbeginn der eine Niederhalterfinger einsetzen, dann, sobald das Werkzeug den Bereich des zweiten Niederhalterfingers verlassen hat, auch der zweite Niederhalterfinger und, bevor das Werkzeug zum Ausgangspunkt zurückkehrt, der erste Niederhalterfinger abheben, um den geschlossenen Bearbeitungsvorgang ohne Unterbrechung des Werkzeugeinsatzes und ohne Unterbrechung auch der Niederhalterwirkung durchführen zu können. Abgesehen davon lassen sich durch die beiden Niederhalterringer auch Werkstücke nach einer bearbeitungsbedingten Zweiteilung entsprechend fixieren oder auch nur die Niederhalterkräfte eines Fingers verdoppeln.

Da die Niederhaltereinheit eine selbständige, dem Aufspanntisch zugeordnete Einrichtung darstellt, ist es möglich, die Niederhaltereinheit auch zu anderen Zwecken zu nutzen. Vorteilhafterweise kann dabei die Niederhaltereinrichtung eine Werkzeugwechseleinrichtung für das Werkzeugaggregat aufnehmen, wodurch der Werkzeugwechselvorgang des Werkzeugaggregates vereinfacht wird.

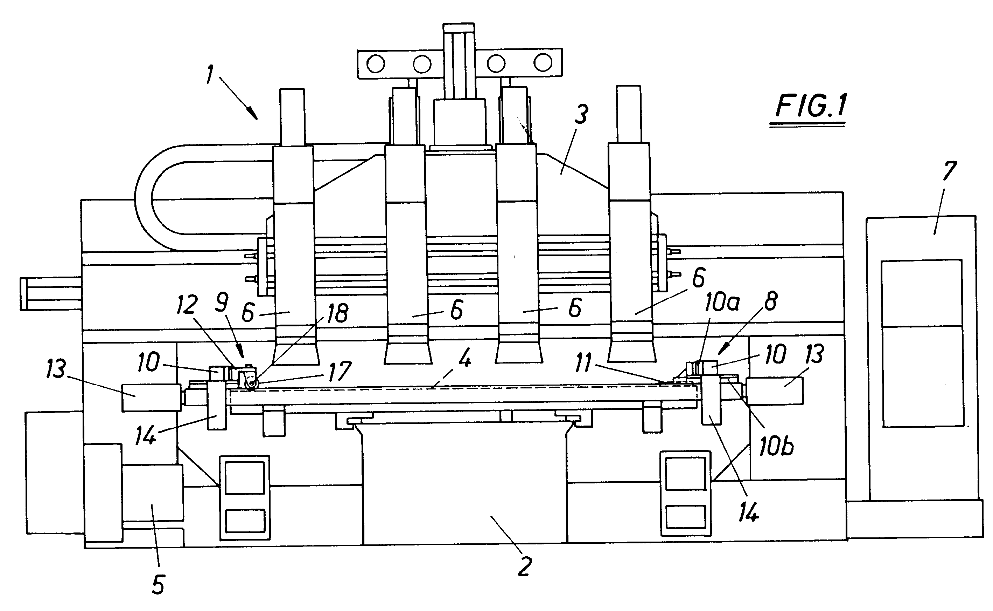

In der Zeichnung ist der Erfindungsgegenstand an Hand eines Aus führungsbeispieles rein schematisch veranschaulicht, und zwar zeigen
- Fig. 1 und 2: eine Vorrichtung in Vorderansicht und Draufsicht und
- Fig. 3: ein Arbeitsschema für eine Einsatzmöglichkeit der Niederhaltereinheit dieser Vorrichtung.

Zur gemeinsamen Bearbeitung von in mehreren Lagen aufeinandergelegten Werkstücken W gibt es eine Vorrichtung 1 mit einem Aufspanntisch 2 und einem Werkzeugaggregat 3. Der Aufspanntisch 2 bildet eine Auflagefläche 4 zum Auflegen der zu bearbeitenden Werkstücke und eine Aufspanneinrichtung, beispielsweise eine Vakuumpumpe 5 zur Unterdruckbeaufschlagung der Arbeitsfläche 4 sorgt für eine Halterung der Werkstücke auf der Auflagefläche. Das Werkzeugaggregat 3 ist mit ein oder mehreren Werkzeugen 6, etwa Bohr- oder Fräswerkzeugen, ausgerüstet, die über die Auflagefläche 4 verfahrbar sind. Dabei kommt es nur auf die Relativbewegung zwischen Werkzeugen bzw. Werkzeugaggregat und Auflagefläche an, so daß zur Positionierung der Werkzeuge Auflagefläche und/oder Werkzeugaggregat bewegt werden könnte. Eine numerische Steuerung 7 sorgt dabei für die gewünschte Positionierung der Werkzeuge 6 und den Bearbeitungsprozeß.

Um nun Werkstückstapel ohne zusätzliche Maßnahmen gut und sicher auf der Auflagefläche 4 aufspannen zu können, umfaßt die Aufspanneinrichtung außer der Vakuumeinrichtung für die Auflagefläche 4 je nach Erfordernis ein oder mehrere Niederhaltereinheiten 8, 9, die jeweils aus einem über die Auflagefläche bewegbaren Niederhalterschlitten 10 und zumindest einem lageverstellbaren und kraftbeaufschlagbaren Niederhalterfinger 11, 12 besteht. Der Niederhalterschlitten 10 setzt sich aus einem Längsschlitten 10a und einem Querschlitten 10b zusammen, so daß die Niederhalterfinger 11, 12 im Bereich der Auflagefläche 4 beliebig positioniert werden können und außerdem sind die Schlittenantriebe 13, 14 und die Stelltriebe 15, 16 für die Niederhalterfinger über die numerische Steuerung 7 in Abhängigkeit vom Arbeitsprogramm des Werkzeugaggregates 3 ansteuerbar. Dadurch lassen sich die Niederhalterfinger jeweils im günstigsten Werkstückbereich einsetzen und auch die Niederhalterwirkung ist optimal an den Bearbeitungsvorgang anzupassen.

Je nach Einsatzart können, wie für die Niederhaltereinheit 8 angedeutet, zwei einzeln betätigbare Niederhalterfinger 11 vorgesehen sein, oder es ist auch möglich, wie bei der Niederhaltereinheit 9 nur einen Niederhalterfinger 12 vorzusehen, der dann eine Niederhalterrolle 17 mit einer Bremse 18 trägt. So lassen sich einerseits das Niederhalterpaar 11 abwechselnd und übergreifend einsetzen oder anderseits kann die Niederhalterwirkung durch die Niederhalterrolle 17 auch während einer Positionsveränderung aufrecht erhalten werden, wobei durch Bremsung der Niederhalterrolle die Niederhalterposition dieses Niederhalterfingers 12 fixierbar ist.

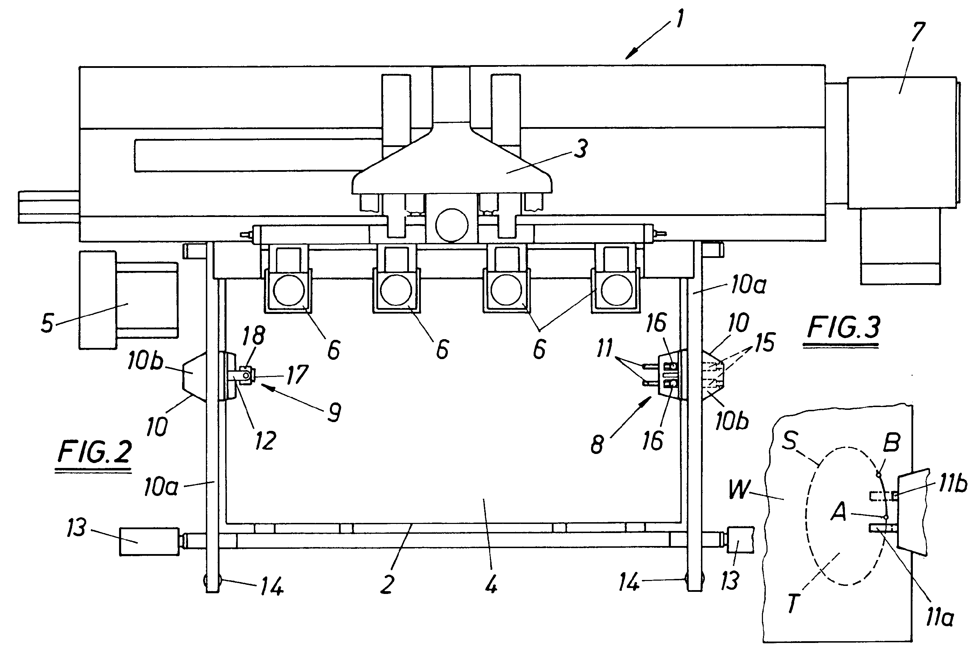

Wird daher beispielsweise aus einem Stapel von Werkstücken W ein Werkstückteil T herausgeschnitten, kann so die Niederhaltereinheit 9 mit ihrer Niederhalterrolle 17 einem geschlossenen Schnittvorgang zumindest schrittweise folgen, ohne die Niederhalterkraft zu verringern, so daß ein umlaufender Schnitt ohne Behinderung durch den Niederhalterfinger möglich ist. Bei der Niederhaltereinheit 8 werden, wie in Fig. 3 angedeutet, die Niederhalterfinger 11 abwechselnd eingesetzt, wobei zuerst der erste Finger 11a vorgeschoben und aufgesetzt wird, dann das Werkzeug seinen Schnitt bei Punkt A beginnt und dem Schnittverlauf S entsprechend schneidet, bis der Aufsetzbereich des zweiten Niederhalterfingers 11b, etwa bei Punkt B überschritten ist, worauf der zweite Niederhalterfinger 11b ausfährt und auf den Werkstückteil T aufsetzt und der erste Niederhalterfinger 11a gelöst und zurückgezogen werden kann, wodurch nun die ganze Schnittkurve S für die Bearbeitung frei ist. Der erste Niederhalterfinger 11a kann hier in zurückgezogener Stellung den verbleibenden Werkstückrest niederhalten, so daß eine einwandfreie Fixierung des Stapels gewährleistet ist.

Zusätzlich zu den Niederhaltereinheiten wird der Werkstückstapel unter Zwischenlage einer entsprechenden Aufspannpalette oder einer geeigneten Unterlage aus Folie oder Papier auf der Auflagefläche durch Unterdruckbeaufschlagung festgehalten, so daß eine ausgezeichnete Aufspannung der Werkstücke auch bei mehrlagigen Stapeln gewährleistet ist.

## Patentansprüche

1. Vorrichtung (1) zum Bearbeiten von insbesondere übereinandergelegten Werkstücken (W), mit einem eine Auflagefläche (4) und eine Aufspanneinrichtung (5) aufweisenden Aufspanntisch (2) und einem über die Auflagefläche (4) verfahrbaren, numerisch gesteuerten Werkzeugaggregat (3), welcher Aufspanneinrichtung wenigstens ein über die ganze Auflagefläche (4) bewegbarer, gegen die Auflagefläche (4) drückbarer Niederhalter zugehört, dadurch gekennzeichnet, daß der Niederhalter aus einer unabhängig vom Werzeugaggregat bewegbaren Niederhaltereinheit (8; 9) besteht, die einen Niederhalterschlitten (10) und einen lageverstellbaren und kraftbeaufschlagbaren Niederhalterfinger (11; 12) umfaßt, wobei die Schlittenantriebe (13, 14) und Fingerstelltriebe (15, 16) in Abhängigkeit von der Steuerung des Werkzeugaggregates (3) ansteuerbar sind.

2. Vorrichtung nach Anspruch 1, dadurch gekennzeichnet, daß der Niederhalterfinger (12) eine bremsbare Niederhalterrolle (17) trägt.

3. Vorrichtung nach Anspruch 1, dadurch gekennzeichnet, daß der Niederhalterschlitten (10) zwei einzeln betätigbare Niederhalterfinger (11) aufnimmt.

4. Vorrichtung nach einem der Ansprüche 1 - 3, dadurch gekennzeichnet, daß die Niederhaltereinheit eine Werkzeugwechseleinrichtung für das Werkzeugaggregat aufnimmt.

## Claims

1. Apparatus (1) for machining workpieces (W), more particularly superposed workpieces, comprising a fixture (2) having a support surface (4) and a clamping means (5), and a numerically controlled tool unit (3), which is adapted to traverse the support surface (4), the clamping means being associated with at least one hold-down means movable over the entire support surface (4) and pressable against the support surface (4), characterised in that the hold-down means consists of a hold-down unit (8; 9) which is movable independently of the tool unit and which comprises a hold-down carriage (10) and a positionally adjustable hold-down finger (11; 12) to which force can be applied, the carriage drives (13, 14) and the finger adjustment drives (15, 16) being adapted to be actuated in dependence on the control of the tool unit (3).

2. Apparatus according to claim 1, characterised in that the hold-down finger (12) carries a brakable holddown roller (17).

3. Apparatus according to claim 1, characterised in that the hold-down carriage (10) accommodates two individually actuatable hold-down fingers (11).

4. Apparatus according to any one of claims 1 to 3, characterised in that the hold-down unit accommodates a tool-changing means for the tool unit.

## Revendications

1. Dispositif (1) pour l'usinage de pièces à usiner (W), en particulier superposées, avec une table de bridage (2) présentant une surface de pose (4) et un dispositif de bridage (5) et un groupe d'outillage (3) à commande numérique, déplaçable au-dessus de la surface de pose (3), le dispositif de bridage comprenant au moins un dévêtisseur, pouvant être pressé contre la surface de pose (4), déplaçable au-dessus de la totalité de la surface de pose (4),
caractérisé en ce que le dévêtisseur est composé d'une unité de dévêtissage (8; 9), déplaçable indépendamment du groupe d'outillaoe, comprenant un chariot de dévêtissage (10) et un doigt de dévêtissage (11; 12), dont la position est réglable et pouvant être sollicité par une force, les entraînements de chariot (13, 14) et les entraînements de réglage de doigt (15, 16) pouvant être commandés par la commande du groupe d'outillage (3).

2. Dispositif selon la revendication 1,
caractérisé en ce que le doigt de dévêtissage (12) porte un rouleau de dévêtissage pouvant être freiné..

3. Dispositif selon la revendication 1,
caractérisé en ce que le chariot de dévêtissage (10) reçoit deux doigts de dévêtissage (11) pouvant être actionnés individuellement.

4. Dispositif selon l'une des revendications 1 à 3,
caractérisé en ce que l'unité de dévêtissage porte un dispositif de changement d'outil pour le groupe d'outillage.
